# EUROPÄISCHE PATENTSCHRIFT

(11) **EP 3 079 933 B1**
(45) Veröffentlichungstag und Bekanntmachung des Hinweises auf die Patenterteilung: **17.01.2018**
(21) Anmeldenummer: 14808495.7
(22) Anmeldetag: 26.11.2014
(51) Int. Cl.: B60K 7/00, H02K 7/116

(54) **SELBSTFAHRENDE ARBEITSMASCHINE**
SELF-PROPELLED MACHINE
ENGIN DE TRAVAIL AUTOMOTEUR

(30) Priorität: 11.12.2013 DE 202013011046 U
(43) Veröffentlichungstag der Anmeldung: 19.10.2016
(73) Patentinhaber: Liebherr-Components Biberach GmbH, 88400 Biberach/Riß (DE)
(72) Erfinder: MÜNST, Thomas, 88444 Ummendorf-Fischbach (DE)
(74) Vertreter: Thoma, Michael
(86) Internationale Anmeldenummer: PCT/EP2014/003163
(87) Internationale Veröffentlichungsnummer: WO 2015/086114

(56) Entgegenhaltungen:
- EP-A2- 1 031 452
- WO-A1-03/104067
- WO-A2-2007/033739
- DE-A1-102010 007 066
- DE-A1-102010 010 438
- US-A- 1 863 504
- US-A1- 2001 004 948

## Beschreibung

Die vorliegende Erfindung betrifft eine selbstfahrende Arbeitsmaschine, insbesondere Kettenfahrzeug wie Planierraupe, mit einem Fahrantrieb umfassend zumindest einen Elektromotor zum Antreiben zumindest eines Fahrwerkrades, insbesondere Kettenrads oder Turas.

Eine solche selbstfahrende Arbeitsmaschine ist bspw. aus der Schrift WO 03/104067 A1 bekannt.

Bei selbstfahrenden Arbeitsmaschinen wie Planierraupen oder ähnlichen Kettenfahrzeugen oder auch anderen selbstfahrenden Offroad-Fahrzeugen für Baustellen, Minen und dergleichen werden in jüngerer Zeit Elektroantriebe mit zumindest einem Elektromotor verwendet, um die gegenüber hydrostatischen Antrieben typischen Vorteile solcher Elektroantriebe wie beispielsweise deren besseren Wirkungsgrad und eine leichtere Wartung zu nutzen. Durch den beträchtlich besseren Wirkungsgrad können bei den teilweise beachtlichen Leistungen auch deutlich niedrigere Betriebskosten erreicht werden. Der Elektroantrieb kann dabei insbesondere als Fahrantrieb genutzt werden, mittels dessen zumindest ein Kettenantrieb des Fahrwerks angetrieben wird. Beispielsweise kann ein Elektromotor ein Kettenrad bzw. den Turas des Kettentriebs antreiben.

Im Vergleich zu hydrostatischen Antrieben sind Elektromotoren bei gleicher Ausgangsleistung jedoch sehr viel, größer und besitzen damit auch eine höhere Rotationsträgheit, so dass bei Beschleunigungsvorgängen eine größere Energie aufgewendet werden muss. Dies führt wiederum zu schlechterer Effizienz, wenn die zur Beschleunigung aufgewendete Energie nicht wiederverwendet werden kann. Insofern sind die Elektromotoren möglichst trägheitsarm auszuführen.

Mit der Trägheit von Elektromotoren beim Einsatz in Planierraupen befasst sich die Schrift US 2010/0126786 A1, gemäß der die Trägheit des Elektromotors größer als die Trägheit des Fahrzeugs sein soll, wobei das Verhältnis der Trägheit des Elektromotors zur Trägheit des Fahrzeugs im Bereich zwischen 1 bis 2,5 sein soll. Hierdurch ist der Elektromotor zwar durchzugs- und leistungsstark. Bei Betrieb mit häufigen Beschleunigungsvorgängen ergeben sich aufgrund der relativ hohen Trägheit des Elektromotors die genannten Effizienznachteile. Weitere Arbeitsmaschinen mit ähnlichen Elektromotoren sind aus den Schriften US 1863504 A, WO 2007/033739 A2, EP 1031452 A2, DE 10 2010 007 066 A1, DE 10 2010 010 438 A1 oder US 2001/004948 A1 bekannt.

Grundsätzlich ist bei einem Elektromotor ein bestimmtes Rotorvolumen notwendig, um eine bestimmte Leistung und ein bestimmtes Drehmoment bereitstellen zu können. Da der Rotor immer zylinderförmig auszuführen ist, berechnet sich das Rotorvolumen aus der Länge des Zylinders und dessen Grundfläche, die sich wiederum aus einer Funktion des Durchmessers ergibt. Insofern gibt es zwei Möglichkeiten, das Rotorvolumen zu steigern, nämlich entweder die Länge oder den Durchmesser zu erhöhen. Um das Massenträgheitsmoment des zylinderförmigen Rotors möglichst gering zu halten, muss deshalb bei einem gegebenen Volumen der Durchmesser möglichst klein und die Länge möglichst groß gehalten werden. Mit anderen Worten können höhere Leistungen und höhere Drehmomente bei gleichzeitig relativ niedrigem Trägheitsmoment mit schlanken, langen Motoren mit kleinem Durchmesser bereitgestellt werden.

Solche langen, schlanken Elektromotoren sind in selbstfahrenden Arbeitsmaschinen wie Planierraupen, die eine relativ schmale Spurbreite besitzen, jedoch schwierig zu verbauen, insbesondere wenn Einzelrad- bzw. -kettenantriebe verwendet werden, bei denen jeweils ein separater Elektromotor ein rechtes und ein linkes Rad bzw. Kettenrad antreibt, da sich die langen, schlanken Elektromotoren solcher Einzelradantriebsanordnungen gegenseitig im Weg stehen bzw. nicht genügend Einbauraum für solche langen, schlanken Elektromotoren zur Verfügung steht.

Hiervon ausgehend liegt der vorliegenden Erfindung die Aufgabe zugrunde, eine verbesserte selbstfahrende Arbeitsmaschine der eingangs genannten Art zu schaffen, die Nachteile des Standes der Technik vermeidet und Letzteren in vorteilhafter Weise weiterbildet. Insbesondere soll ein trägheitsarmer, dennoch ausreichend leistungs- und drehmomentstarker Elektroantrieb für relativ schmalspurige Arbeitsmaschinen wie Planierraupen geschaffen werden, der mit dem bei solchen Arbeitsmaschinen begrenzten Einbauraum auskommt.

Erfindungsgemäß wird die genannte Aufgabe durch eine selbstfahrende Arbeitsmaschine gemäß Anspruch 1 gelöst. Bevorzugte Ausgestaltungen der Erfindung sind Gegenstand der abhängigen Ansprüche.

Es wird also vorgeschlagen, die Kollisions- bzw. Platzproblematik einer langen, schlanken Elektromotorenbauweise dadurch zu entschärfen, dass der Elektromotor nicht mehr koaxial zu dem anzutreibenden Rad eingebaut wird, sondern zur Raddrehachse versetzt und/oder abgewinkelt positioniert und mit dem anzutreibenden Rad über eine Getriebestufe verbunden wird. Erfindungsgemäß ist der Elektromotor mit seiner Motordrehachse versetzt und/oder abgewinkelt zur Raddrehachse des von dem Elektromotor anzutreibenden Fahrwerkrades angeordnet. Das genannte Fahrwerkrad kann dabei ein Kettenrad bzw. der Turas eines Kettenfahrwerks oder bei einem luftbereiften Fahrwerk eines der anzutreibenden Räder sein. Die Raddrehachse und die Motordrehachse können dabei zueinander parallel voneinander beabstandet sein, können einander unter einem spitzen, rechten oder stumpfen Winkel schneiden, oder können zueinander windschief angeordnet sein. Je nach platz- bzw. bauraumtechnischen Gegebenheiten der Arbeitsmaschine kann der Elektromotor mit seiner Längsachse so ausgerichtet werden, dass der zur Verfügung stehende Bauraum bestmöglich ausgenutzt wird.

Insbesondere kann durch die genannte versetzte bzw. abgewinkelte Ausrichtung der Elektromotordrehachse eine Kollision von zwei langen, schlanken Elektromotoren vermieden werden, die als Einzelradantrieb zwei einander gegenüberliegende, auf verschiedenen Maschinenseiten angeordnete und/oder derselben Fahrwerksachse zugeordnete Räder bzw. Kettenräder antreiben. Sind solche einander auf verschiedenen Maschinenseiten gegenüberliegende und/oder derselben Fahrwerksachse zugeordnete Fahrwerksräder von zwei separaten Elektromotoren antreibbar, können die genannten Elektromotoren derart versetzt und/oder zur jeweiligen Raddrehachse abgewinkelt angeordnet sein, dass sich die beiden Elektromotoren quer zu ihren Motordrehachsen betrachtet einander überlappen. Eine solche überlappende Elektromotorenanordnung kann insbesondere dann vorteilhaft sein, wenn die Elektromotoren eine Länge besitzen, die größer als die halbe Spurbreite der Arbeitsmaschine ist, so dass die Elektromotoren bei koaxialer Anordnung zur Raddrehachse miteinander kollidieren würden.

Insbesondere können die in der genannten Weise einander überlappenden Elektromotoren mit ihren Motordrehachsen zueinander im Wesentlichen parallel ausgerichtet sein und einander über zumindest 50% ihrer Längserstreckung überlappen um eine kompakte Motorenanordnung mit geringem axialem Überstand zu erreichen, können die Elektromotoren einander vorzugsweise über im Wesentlichen ihre gesamte Länge überlappen, so dass bei Betrachtung der beiden Elektromotoren quer zu deren Motordrehachsen die gesamte Länge der Elektromotorenanordnung, also die Längserstreckung parallel zu den Motordrehachsen, im Wesentlichen nur der Länge eines Elektromotors entspricht.

Um ein ausreichendes Rotorvolumen und damit eine leistungs- und drehmomentstarke Motorauslegung bei dennoch begrenztem, relativ kleinem Trägheitsmoment des Elektromotorenrotors vorsehen zu können, können die Elektromotoren jeweils eine axiale Länge besitzen, die mehr als 50%, vorzugsweise mehr als 75%, insbesondere auch mehr als 80% der Spurbreite der Arbeitsmaschine beträgt. Bei einem Kettenfahrzeug wie einer Planierraupe kann die genannte Spurbreite die Beabstandung der gegenüberliegenden Kettenräder bzw. Turas meinen oder den Abstand der Längsmittelebenen der beiden Raupenketten rechts und links an der Arbeitsmaschine. Bei luftbereiften Fahrwerken meint die genannte Spurbreite die Beabstandung der gegenüberliegenden, von den Elektromotoren jeweils anzutreibenden Rädern.

Um eine ausreichende Leistungsstärke bei gleichzeitig begrenztem Trägheitsmoment zu erreichen, kann die Elektromotorenlänge größer sein als der Elektromotorendurchmesser bzw. kann die Rotorlänge größer als der Rotordurchmesser sein. Vorteilhafterweise kann die genannte Elektromotoren- bzw. Rotorlänge etwa 150% bis 500%, insbesondere etwa 150% bis 250% des Elektromotoren- bzw. Rotordurchmessers betragen.

Im Gegensatz zum eingangs genannten Stand der Technik ist die reduzierte Trägheit des zumindest einen Elektromotors kleiner als die reduzierte Trägheit der anzutreibenden Arbeitsmaschine, wobei die auf die Radachse des anzutreibenden Rads reduzierte Trägheit des Elektromotors etwa 0,4 bis 1,0, vorzugsweise 0,4 bis 0,95, insbesondere etwa 0,5 bis 0,85 x der reduzierten Trägheit der Arbeitsmaschine beträgt.

Für die Ausrichtung und Anordnung der Elektromotoren gibt es hierbei mehrere vorteilhafte Ausgestaltungen. Insbesondere kann der zumindest eine Elektromotor mit seiner Motordrehachse liegend quer zur Fahrtrichtung bzw. zur vertikalen Längsmittelebene der Arbeitsmaschine ausgerichtet und gegenüber der Raddrehachse des von dem Elektromotor anzutreibenden Fahrwerkrads in Fahrtrichtung versetzt angeordnet sein und/oder nach oben über die Höhe der Radachse hinaus versetzt angeordnet sein. Das Nach-oben-Versetzen des Elektromotors kann von Vorteil sein, um den Elektromotor bzw. dessen Motorwelle ölfrei zu halten.

Sind in der vorgenannten Weise zwei Elektromotoren vorgesehen, die als Einzelradantrieb einander gegenüberliegende bzw. auf gegenüberliegenden Maschinenseiten angeordnete oder einer gemeinsamen Fahrwerksachse zugeordnete Fahrwerksräder antreiben, können in vorteilhafter Weiterbildung der Erfindung die genannten Elektromotoren bezüglich der Raddrehachse zu verschiedenen Seiten hin versetzt sein. Insbesondere kann einer der Elektromotoren in Fahrtrichtung nach vorne und der andere Elektromotor in Fahrtrichtung nach hinten gegenüber der jeweiligen Raddrehachse versetzt sein, wobei vorteilhafterweise beide Elektromotoren nach oben über die Höhe der Raddrehachsen hinaus versetzt angeordnet sein können. Betrachtet man die zueinander koaxialen Raddrehachsen von einer Seite her, d.h. in Raddrehachsenrichtung, kann einer der Elektromotoren beispielsweise im Bereich zwischen 9:00 Uhr und 12:00 Uhr, insbesondere zwischen 10:00 Uhr und 11:00 Uhr angeordnet sein, während der andere Elektromotor im Bereich zwischen 12:00 Uhr und 3:00 Uhr, insbesondere zwischen 1:00 Uhr und 2:00 Uhr angeordnet sein kann.

Alternativ oder zusätzlich zu einer solchen Motoranordnung liegend quer zur Fahrtrichtung - zusätzlich insofern, wenn mehrere Fahrwerksachsen elektromotorisch angetrieben werden - kann der zumindest eine Elektromotor mit seiner Motordrehachse auch parallel oder ggf. leicht spitzwinklig geneigt zu einer vertikalen Längsmittelebene der Arbeitsmaschine ausgerichtet und über eine Winkelgetriebestufe mit der Raddrehachse des anzutreibenden Fahrwerkrades verbunden sein. Vorteilhafterweise kann der zumindest eine Elektromotor mit seiner Motordrehachse liegend etwa fahrtrichtungsparallel in die Arbeitsmaschine eingebaut sein oder aufrecht eingebaut sein.

Bei Einzelradantrieben für einander gegenüberliegende Fahrwerks- bzw. Kettenräder können die beiden Elektromotoren in Fahrtrichtung betrachtet auf derselben Höhe angeordnet liegen oder auch aufrecht eingebaut sein, wobei die Elektromotoren mit ihren Motordrehachsen zueinander parallel ausgerichtet sein können und bei Betrachtung quer zu den Motordrehachsen einander im Wesentlichen vollständig überlappen können.

Die genannte Winkelgetriebestufe kann hierbei eine Kegelradstufe umfassen, so dass die Motordrehachse die Raddrehachse schneiden kann, insbesondere unter einem im Wesentlichen rechten Winkel.

Alternativ zu einer solchen schneidenden Drehachsenanordnung kann die Motordrehachse jedoch auch windschief zu der Raddrehachse angeordnet werden, wobei hier die genannte Winkelgetriebestufe eine Hypoidgetriebestufe umfassen kann. Eine solche Hypoidgetriebestufe bzw. ein damit erreichbarer Höhen- bzw. Querversatz der Motordrehachse zur Raddrehachse kann insbesondere bei einer liegenden Anordnung des Elektromotors von Vorteil sein, um den Elektromotor gegenüber der Raddrehachse nach oben setzen zu können, um einerseits mehr Bodenfreiheit zu gewinnen und andererseits eine Kollision mit weiteren im Höhenbereich der Radachse angeordneten Maschinenkomponenten wie beispielsweise dem Generator oder dem den Generator antreibenden Verbrennungsmotor zu vermeiden.

Die vorliegende Erfindung wird nachfolgend anhand bevorzugter Ausführungsbeispiele und zugehöriger Zeichnungen näher erläutert. In den Zeichnungen zeigen:
- Fig. 1:: eine schematische Draufsicht auf eine selbstfahrende Arbeitsmaschine in Form einer Planierraupe gemäß einem ersten Ausführungsbeispiel der Erfindung, bei dem die gegenüberliegende Fahrwerksräder antreibenden Elektromotoren liegend quer zur Fahrtrichtung ausgerichtet sind,
- Fig. 2:: eine Seitenansicht der Arbeitsmaschine aus Fig. 1, die die Höhenposition der Elektromotoren aus Fig. 1 relativ zu dem anzutreibenden Fahrwerksrad zeigt,
- Fig. 3:: eine Draufsicht auf eine Arbeitsmaschine ähnlich Fig. 1 gemäß einer, weiteren Ausführung der Erfindung, bei der die Elektromotoren in aufrechter Anordnung positioniert und über eine Kegelradgetriebestufe mit den anzutreibenden Fahrwerksrädern verbunden sind,
- Fig. 4:: eine Draufsicht auf eine Arbeitsmaschine ähnlich den Figuren 1 und 3 gemäß einer weiteren Ausführung der Erfindung, bei der die Elektromotoren liegend fahrtrichtungsparallel angeordnet sind und über eine Hypoidgetriebestufe höhenversetzt gegenüber den Radachsen sind, und
- Fig. 5:: eine Seitenansicht der Arbeitsmaschine aus Fig. 4, die den Höhenversatz der Elektromotorendrehachse gegenüber der Raddrehachse zeigt.

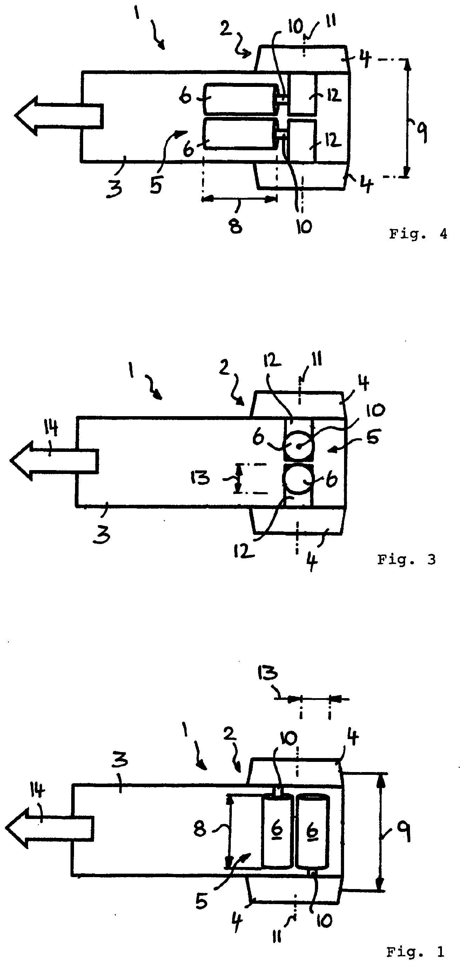

Die in Fig. 1 nur schematisch dargestellte, selbstfahrende Arbeitsmaschine kann beispielsweise ein Kettenfahrzeug, insbesondere eine Planierraupe 1 sein, deren Fahrwerk als Kettenfahrwerk 2 mit jeweils einer Raupenkette rechts und links des Maschinenkorpus 3 ausgebildet sein kann. Die genannten Raupenketten können dabei jeweils mittels eines Fahrwerkrads 4 insbesondere in Form eines Kettenrads bzw. eines Turas angetrieben werden, wobei die anzutreibenden Fahrwerks- bzw. Kettenräder auf verschiedenen Seiten des Maschinenkorpus 3 einander gegenüberliegend angeordnet sein können, so dass sie eine gemeinsame Fahrwerksachse bilden, vgl. Fig. 1.

Der Fahrantrieb 5 umfasst dabei Einzelradantriebe mit jeweils zumindest einem Elektromotor 6 zum Antreiben jeweils eines der genannten Fahrwerksräder 4, wobei die genannten Elektromotoren 6 unter Zwischenschaltung einer Getriebestufe mit dem jeweiligen Fahrwerksrad 4 verbunden sein können.

Wie Fig. 1 zeigt, sind die genannten Elektromotoren 6 in langer, schlanker Bauweise mit relativ kleinem Durchmesser, aber großer axialer Länge ausgebildet, so dass die Elektromotoren 6 sich über die Längsmittelebene des Maschinenkorpus 3 hinweg erstrecken. Die axiale Länge 8 der Elektromotoren 6 kann größer als die halbe Spurweite 9 der Planierraupe 1 sein.

Um bei liegender, quer zur Fahrtrichtung orientierter Ausrichtung der Elektromotoren 6 dennoch keine Kollision zwischen den beiden Elektromotoren 6 zu haben, sind die beiden Elektromotoren 6 nicht koaxial mit den jeweils anzutreibenden Fahrwerksrädern 4 angeordnet, sondern parallel hierzu versetzt. Insbesondere kann einer der Elektromotoren 6 mit seiner Motordrehachse 10 gegenüber der Raddrehachse 11 des von dem Elektromotor 6 anzutreibenden Fahrwerksrads 4 in Fahrtrichtung nach vorne versetzt und der andere Elektromotor 6 entsprechend in Fahrtrichtung nach hinten versetzt sein, vgl. Fig. 1, so dass die beiden Elektromotoren 6 im Wesentlichen parallel zueinander nebeneinander zu liegen kommen, vgl. Fig. 1.

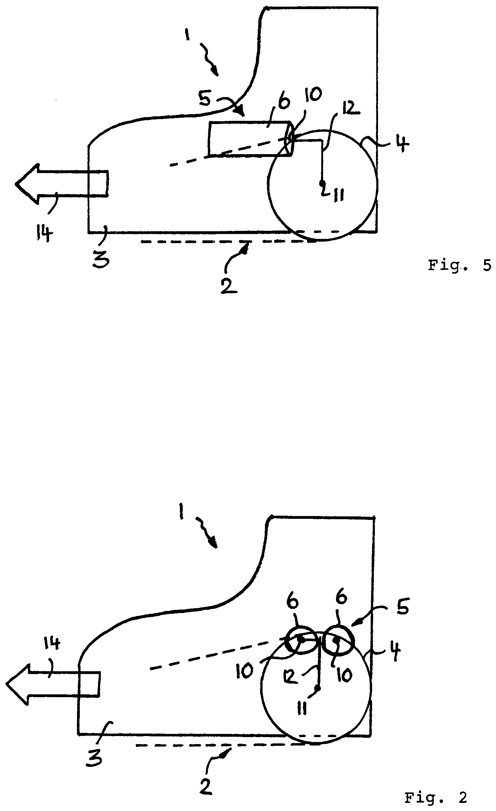

Wie Fig. 2 zeigt, können die Elektromotoren 6 dabei mit ihren Motordrehachsen 10 auch nach oben über die Höhe der Raddrehachsen 11 hinaus versetzt angeordnet sein. Ein solcher Höhenversatz der Elektromotoren 6 gegenüber den Raddrehachsen 11 kann vorteilhaft sein, um die Elektromotoren 6 bzw. deren Welle ölfrei zu halten.

Der Versatz der Motordrehachsen 10 gegenüber den Raddrehachsen 11 kann durch eine geeignete Getriebestufe 12 beispielsweise in Form einer Stirnradstufe überbrückt werden.

Wie Fig. 3 zeigt, können die Elektromotoren 6 auch in einer aufrechten Ausrichtung angeordnet werden, vorteilhafterweise etwa parallel zu einer vertikalen Längsmittelebene durch den Maschinenkorpus 3 und/oder im Wesentlichen unmittelbar über den miteinander fluchtenden Raddrehachsen 11 der Fahrwerksräder 4, so dass die Motordrehachsen 10 die Raddrehachsen 11 schneiden, insbesondere unter einem im Wesentlichen rechten Winkel.

Die Elektromotoren 6 bzw. deren Motordrehachsen 10 können über eine Winkelgetriebestufe 12 insbesondere in Form einer Kegelradstufe mit den anzutreibenden Fahrwerksrädern 4 verbunden werden.

Wie Fig. 4 zeigt, können die Elektromotoren 6 auch liegend insbesondere etwa fahrtrichtungsparallel ausgerichtet sein bzw. näherungsweise parallel zu einer vertikalen Längsmittelebene durch den Maschinenkorpus 3 in einer liegenden Ausrichtung positioniert sein. Die Elektromotoren 6 können dabei wiederum vorteilhafterweise mit ihren Motordrehachsen 6 parallel zueinander angeordnet und/oder nebeneinander liegend angeordnet sein, so dass sie quer zur Motordrehachse 10 betrachtet einander im Wesentlichen vollständig überlappen.

Bei der in Fig. 4 gezeigten fahrtrichtungsparallelen, liegenden Ausrichtung der Elektromotoren 6 können die Elektromotoren 6 auf Höhe der Raddrehachsen 11 angeordnet sein bzw. können die Motordrehachsen 10 die Raddrehachsen 11 schneiden, wobei die Elektromotoren 6 in diesem Fall über jeweils eine Kegelrad-Getriebestufe 12 mit dem jeweiligen Fahrwerksrad 4 verbunden sein können.

Alternativ zu einer solchen mit den Raddrehachsen 11 niveaugleichen Motoranordnung können die Elektromotoren 6 auch gegenüber den Raddrehachsen 11 höhenversetzt angeordnet sein, insbesondere nach oben über die Höhe der Raddrehachsen 11 hinaus versetzt sein, um die Bodenfreiheit im Bereich der Elektromotoren 6 zu erhöhen und/oder deren Kollisionspotential mit anderen im Höhenbereich der Raddachsen liegenden Maschinenkomponenten wie beispielsweise einem Generator zu vermeiden. Bei einer höhenversetzten Motoranordnung, wie in Fig. 5 gezeigt, können die Elektromotoren 6 mittels einer Hypoid-Getriebestufe 12 mit dem jeweiligen Fahrwerksrad 4 verbunden sein.

Ohne dass dies in den Zeichnungen gezeigt ist, können die Elektromotoren 6 ggf. auch in einer zur Vertikalen und zur Horizontalen spitzwinklig geneigten Anordnung positioniert sein, beispielsweise in einer Ausrichtung etwa parallel zu einer vertikalen Längsmittelebene durch den Maschinenkorpus 3, so dass die Elektromotorenanordnung sozusagen eine Mischform zwischen Fig. 3 und Fig. 4 bilden würde.

## Patentansprüche

1. Selbstfahrende Arbeitsmaschine, insbesondere Kettenfahrzeug wie Planierraupe (1), mit einem Fahrantrieb (5) umfassend zumindest einen Elektromotor (6) zum Antreiben zumindest eines Fahrwerksrads (4), insbesondere Kettenrads oder Turas, wobei der Elektromotor (6) mit seiner Motordrehachse (10) versetzt und/oder abgewinkelt zur Raddrehachse (11) des von dem Elektromotor (6) anzutreibenden Fahrwerkrads (4) angeordnet ist, **dadurch gekennzeichnet, dass** der zumindest eine Elektromotor (6) eine reduzierte Trägheit θ_{red,mot} im Bereich von 0,4 bis 1,0 der reduzierten Trägheit θ_{red,AM} der Arbeitsmaschine besitzt.

2. Selbstfahrende Arbeitsmaschine nach dem vorhergehenden Anspruch, wobei der Fahrantrieb (4) als Einzelradantrieb ausgebildet ist oder Einzelradantriebe umfasst.

3. Selbstfahrende Arbeitsmaschine nach einem der vorhergehenden Ansprüche, wobei einander auf verschiedenen Maschinenseiten gegenüberliegende und/oder derselben Fahrwerksachse zugeordnete Fahrwerksräder (4) von zwei separaten Elektromotoren (6) antreibbar sind, die quer zu den Motordrehachsen betrachtet einander überlappend angeordnet sind.

4. Selbstfahrende Arbeitsmaschine nach dem vorhergehenden Anspruch, wobei die Elektromotoren (6) mit ihren Motordrehachsen (10) zueinander parallel ausgerichtet sind und einander über zumindest 50% ihrer Längserstreckung (8), vorzugsweise über im Wesentlichen 100% ihrer Längserstreckung (8), überlappen.

5. Selbstfahrende Arbeitsmaschine nach einem der vorhergehenden Ansprüche, wobei der zumindest eine Elektromotor (6) eine Länge (8) von mehr als 100%, vorzugsweise etwa 150% bis 500%, insbesondere etwa 150% bis 250%, des Durchmessers (13) des Elektromotors besitzt.

6. Selbstfahrende Arbeitsmaschine nach einem der vorhergehenden Ansprüche, wobei der zumindest eine Elektromotor (6) eine reduzierte Trägheit θ_{red,mot} im Bereich von 0,4 bis 0,95, insbesondere 0,5 bis 0,85 der reduzierten Trägheit θ_{red,AM} der Arbeitsmaschine besitzt.

7. Selbstfahrende Arbeitsmaschine nach einem der vorhergehenden Ansprüche, wobei der zumindest eine Elektromotor (6) mit seiner Motordrehachse (10) liegend quer zur Fahrtrichtung (14) ausgerichtet und gegenüber der Raddrehachse (11) des von dem Elektromotor (6) anzutreibenden Fahrwerkrads (4) in Fahrtrichtung (14) versetzt angeordnet und/oder nach oben über die Höhe der Raddrehachse (11) hinaus versetzt angeordnet ist.

8. Selbstfahrende Arbeitsmaschine nach dem vorhergehenden Anspruch, wobei die einander gegenüberliegende Fahrwerksräder (4) antreibenden Elektromotoren (6) jeweils liegend quer zur Fahrtrichtung ausgerichtet und gegenüber den Raddrehachsen der von den Elektromotoren (6) anzutreibenden Fahrwerksrädern in Fahrtrichtung (14) versetzt angeordnet sind, wobei einer der Elektromotoren (6) in Fahrtrichtung nach vorne und der andere Elektromotor (6) in Fahrtrichtung nach hinten versetzt angeordnet ist.

9. Selbstfahrende Arbeitsmaschine nach dem vorhergehenden Anspruch, wobei beide Elektromotoren (6) nach oben über die Höhe der Raddrehachsen (11) hinaus versetzt angeordnet sind.

10. Selbstfahrende Arbeitsmaschine nach einem der Ansprüche 1 bis 8, wobei der zumindest eine Elektromotor (6) mit seiner Motordrehachse (10) parallel zu einer vertikalen Längsmittelebene der Arbeitsmaschine ausgerichtet und über eine Winkelgetriebestufe (12) mit dem anzutreibenden Fahrwerksrad (4) verbunden ist.

11. Selbstfahrende Arbeitsmaschine nach dem vorhergehenden Anspruch, wobei die Winkelgetriebestufe (12) eine Kegelrad-Getriebestufe umfasst.

12. Selbstfahrende Arbeitsmaschine nach einem der beiden vorhergehenden Ansprüche, wobei die Winkelgetriebestufe (12) eine Hypoid-Getriebestufe umfasst und die Motordrehachse (10) gegenüber der Raddrehachse (11) des von dem Elektromotor (6) anzutreibenden Rades höhenversetzt, vorzugsweise höhergesetzt, ist.

13. Selbstfahrende Arbeitsmaschine nach einem der Ansprüche 1 bis 8, wobei der zumindest eine Elektromotor (6) liegend und/oder fahrtrichtungsparallel ausgerichtet ist.

14. Selbstfahrende Arbeitsmaschine nach einem der Ansprüche 1 bis 8, wobei der Elektromotor (6) aufrecht ausgerichtet ist.

15. Selbstfahrende Arbeitsmaschine nach einem der beiden vorhergehenden Ansprüche, wobei zwei einander gegenüberliegende Fahrwerksräder (4) antreibende Elektromotoren (6) zueinander parallel ausgerichtet sind und nebeneinanderliegend oder -stehend angeordnet sind.

## Claims

1. A self-propelled work machine, in particular a tracked vehicle such as a bulldozer (1), having at least one traction drive (5) comprising at least one electric motor (6) for driving at least one chassis wheel (4), in particular a chain wheel or sprocket, wherein the motor axis of rotation (10) of the electric motor (6) is displaced and/or angled with respect to the wheel axis of rotation (11) of the chassis wheel (4) to be driven by the electric motor (6), **characterized in that** the at least one electric motor (6) has a reduced inertia θ_{red,mot} in the range from 0.4 to 1.0, preferably 0.4 to 0.95, in particular 0.5 to 0.85, of the reduced inertia θ_{red,AM} of the work machine.

2. A self-propelled work machine in accordance with the preceding claim, wherein the traction drive (4) is formed as a single-wheel drive or as single-wheel drives.

3. A self-propelled work machine in accordance with one of the preceding claims, wherein chassis wheels (4) disposed mutually opposite at different machine sides and/or associated with the same chassis axle can be driven by two separate electric motors (6) which are arranged overlapping one another viewed transversely to the motor axes of rotation.

4. A self-propelled work machine in accordance with the preceding claim, wherein the motor axes of rotation (10) of the electric motors (6) are aligned in parallel with one another and overlap one another over at least 50% of their longitudinal extents (8), preferably over substantially 100% of their longitudinal extents (8).

5. A self-propelled work machine in accordance with one of the preceding claims, wherein the at least one electric motor (6) has a length (8) of more than 100%, preferably approximately 150% to 500%, in particular approximately 150% to 250%, of the diameter (13) of the electric motor.

6. A self-propelled work machine in accordance with one of the preceding claims, wherein the at least one electric motor (6) has a reduced inertia θ_{red,mot} in the range from 0.4 to 0.95, in particular 0.5 to 0.85, of the reduced inertia θ_{red,AM} of the work machine

7. A self-propelled work machine in accordance with one of the preceding claims, wherein the motor axis of rotation (10) of the at least one electric motor (6) is oriented lying transversely to the direction of travel (14) and is arranged displaced in the direction of travel (14) with respect to the wheel axis of rotation (11) of the chassis wheel (4) to be driven by the electric motor (6) and/or is arranged displaced upwardly beyond the level of the wheel axis of rotation (11).

8. A self-propelled work machine in accordance with the preceding claim, wherein the electric motors (6) driving the mutually oppositely disposed chassis wheels (4) are each aligned lying transversely to the direction of travel and are arranged displaced in the direction of travel (14) with respect to the wheel axes of rotation of the chassis wheels to be driven by the electric motors (6), with one of the electric motors (6) being arranged displaced to the front in the direction of travel and the other electric motor (6) being arranged displaced to the rear in the direction of travel.

9. A self-propelled work machine in accordance with the preceding claim, wherein both electric motors (6) are arranged displaced upwardly beyond the level of the wheel axes of rotation (11).

10. A self-propelled work machine in accordance with one of the claims 1 to 8, wherein the motor axis of rotation (10) of the at least one electric motor (6) is aligned in parallel with a vertical longitudinal central plane of the work machine and is connected to the chassis wheel (4) to be driven via a miter gear stage (12).

11. A self-propelled work machine in accordance with the preceding claim, wherein the miter gear stage (12) comprises a bevel gear stage.

12. A self-propelled work machine in accordance with one of the two preceding claims, wherein the miter gear stage (12) comprises a hypoid gear stage and the motor axis of rotation (10) is displaced vertically, preferably set higher, with respect to the wheel axis of rotation (11) of the wheel to be driven by the electric motor (6).

13. A self-propelled work machine in accordance with one of the claims 1 to 8, wherein the at least one electric motor (6) is aligned lying and/or in parallel with the direction of travel.

14. A self-propelled work machine in accordance with one of the claims 1 to 8, wherein the electric motor (6) is oriented in an upright manner.

15. A self-propelled work machine in accordance with one of the two preceding claims, wherein two electric motors (6) driving mutually oppositely disposed chassis wheels (4) are aligned in parallel with one another and are arranged lying or standing next to one another.

## Revendications

1. Engin de travail automoteur, en particulier véhicule chenillé tel qu'un bulldozer (1), doté d'un système d'entraînement (5) comprenant au moins un moteur électrique (6) destiné à entraîner au moins une roue de mécanisme de déplacement (4), en particulier une roue à chaîne ou barbotin, le moteur électrique (6) étant disposé avec son axe de rotation de moteur (10) décalé et/ou formant un angle par rapport à l'axe de rotation de roue (11) de la roue de mécanisme de déplacement (4) destinée à être entraînée par le moteur électrique (6), **caractérisé en ce que** l'au moins un moteur électrique (6) possède une inertie réduite θ_{red,mot} située dans la plage de 0,4 à 1,0 fois l'inertie réduite θ_{red,AM} de l'engin de travail.

2. Engin de travail automoteur selon la revendication précédente, dans lequel le système d'entraînement (4) se présente sous la forme d'un entraînement de roue indépendant ou comprend des entraînements de roue indépendants.

3. Engin de travail automoteur selon l'une des revendications précédentes, dans lequel des roues de mécanisme de déplacement (4) opposées de différents côtés de l'engin et/ou associées au même essieu de mécanisme de déplacement peuvent être entraînées par deux moteurs électriques (6) séparés, qui sont disposés se chevauchant l'un l'autre, vus transversalement aux axes de rotation de moteur.

4. Engin de travail automoteur selon la revendication précédente, dans lequel les moteurs électriques (6) sont orientés avec leurs axes de rotation de moteur (10) parallèles l'un à l'autre et se chevauchent l'un l'autre sur au moins 50 % de leur extension longitudinale (8), de préférence sur sensiblement 100 % de leur extension longitudinale (8).

5. Engin de travail automoteur selon l'une des revendications précédentes, dans lequel l'au moins un moteur électrique (6) possède une longueur (8) représentant plus de 100 %, de préférence environ 150 % à 500 %, en particulier environ 150 % à 250 % du diamètre (13) du moteur électrique.

6. Engin de travail automoteur selon l'une des revendications précédentes, dans lequel l'au moins un moteur électrique (6) possède une inertie réduite θ_{red,mot} située dans la plage de 0,4 à 0,95, en particulier 0,5 à 0,85 fois l'inertie réduite θ_{red,AM} de l'engin de travail.

7. Engin de travail automoteur selon l'une des revendications précédentes, dans lequel l'au moins un moteur électrique (6) est orienté avec son axe de rotation de moteur (10) de manière horizontale transversalement au sens de la marche (14) et disposé décalé dans le sens de la marche (14) par rapport à l'axe de rotation de roue (11) de la roue de mécanisme de déplacement (4) destinée à être entraînée par le moteur électrique (6) et/ou disposé décalé vers le haut au-delà de la hauteur de l'axe de rotation de roue (11).

8. Engin de travail automoteur selon la revendication précédente, dans lequel les moteurs électriques (6) entraînant des roues de mécanisme de déplacement (4) opposées sont orientés respectivement de manière horizontale transversalement au sens de la marche et disposés décalés dans le sens de la marche (14) par rapport aux axes de rotation de roue des roues de mécanisme de déplacement destinées à être entraînées par les moteurs électriques (6), un des moteurs électriques (6) étant disposé décalé vers l'avant dans le sens de la marche et l'autre moteur électrique (6) décalé vers l'arrière dans le sens de la marche.

9. Engin de travail automoteur selon la revendication précédente, dans lequel les deux moteurs électriques (6) sont disposés décalés vers le haut au-delà de la hauteur des axes de rotation de roue (11).

10. Engin de travail automoteur selon l'une des revendications 1 à 8, dans lequel l'au moins un moteur électrique (6) est orienté avec son axe de rotation de moteur (10) parallèle à un plan médian longitudinal vertical de l'engin de travail et est relié à la roue de mécanisme de déplacement (4) destinée à être entraînée par le biais d'un étage d'engrenage angulaire (12).

11. Engin de travail automoteur selon la revendication précédente, dans lequel l'étage d'engrenage angulaire (12) comprend un étage d'engrenage conique.

12. Engin de travail automoteur selon l'une des deux revendications précédentes, dans lequel l'étage d'engrenage angulaire (12) comprend un étage d'engrenage hypoïde et l'axe de rotation de moteur (10) est décalé en hauteur, de préférence placé plus haut, par rapport à l'axe de rotation de roue (11) de la roue destinée à être entraînée par le moteur électrique (6).

13. Engin de travail automoteur selon l'une des revendications 1 à 8, dans lequel l'au moins un moteur électrique (6) est orienté de manière horizontale et/ou parallèle au sens de la marche.

14. Engin de travail automoteur selon l'une des revendications 1 à 8, dans lequel le moteur électrique (6) est orienté de manière verticale.

15. Engin de travail automoteur selon l'une des deux revendications précédentes, dans lequel deux moteurs électriques (6) entraînant des roues de mécanisme de déplacement (4) opposées sont orientés parallèlement l'un à l'autre et sont disposés horizontalement ou verticalement l'un à côté de l'autre.
